# EUROPÄISCHE PATENTSCHRIFT

(11) **EP 2 629 187 B1**
(45) Veröffentlichungstag und Bekanntmachung des Hinweises auf die Patenterteilung: **28.11.2018**
(21) Anmeldenummer: 13000353.6
(22) Anmeldetag: 25.01.2013
(51) Int. Cl.: G06F 3/0484, G06F 3/0488, G05B 19/418

(54) **Verfahren zur Anpassung der graphischen Darstellung auf der Bedienoberfläche einer Computeranwenderstation**
Method for adjusting the graphic representation on the user interface of a computer user station
Procédé destiné à adapter la représentation graphique sur l'interface utilisateur d'un poste utilisateur informatique

(30) Priorität: 18.02.2012 DE 102012003297
(43) Veröffentlichungstag der Anmeldung: 21.08.2013
(73) Patentinhaber: ABB Schweiz AG, 5400 Baden (CH)
(72) Erfinder: Greifeneder, Jürgen, 74523 Schwäbisch Hall (DE)
(74) Vertreter: Marks, Frank

(56) Entgegenhaltungen:
- EP-A1- 0 509 160
- WO-A1-2011/072731
- WO-A2-2011/129981
- DE-A1-102010 036 757

## Beschreibung

Die Erfindung betrifft ein Verfahren zur Anpassung der graphischen Darstellung auf der Bedienoberfläche einer Computeranwenderstation zur graphischen Darstellung von Daten einer technischen Prozessanlage, wobei Eingabesignale auf oder an der Computeranwenderstation zu einer Größenänderung der graphischen Darstellung durch Zoomen des vorgebbaren Anzeigebereichs auf der Bedienoberfläche oder zur Auswahl eines Objektfeldes der graphischen Darstellung, das sich in der graphischen Darstellung an einer zugehörigen Objektfeldposition befindet, zum Zweck der Anzeige oder der Bedienerinteraktion führen, gemäß dem Oberbegriff des Anspruches 1.

Die Erfindung betrifft außerdem eine Anordnung, umfassend mindestens eine Computeranwenderstation zur graphischen Darstellung von Daten einer technischen Prozessanlage, mit einer Bedienoberfläche, gemäß dem Oberbegriff des Anspruchs 8.

Die Erfindung betrifft außerdem ein Computerprogramm, das es einer Computeranwenderstation zur graphischen Darstellung von Daten einer technischen Prozessanlage mit einer Bedienoberfläche ermöglicht, nachdem das Computerprogramm in Speichermittel der Computeranwenderstation geladen worden ist, ein Verfahren zur Anpassung der graphischen Darstellung auf der Bedienoberfläche durchzuführen, sowie ein computerlesbares Speichermedium, auf dem ein Programm gespeichert ist, das es einer Computeranwenderstation zur graphischen Darstellung von Daten einer technischen Prozessanlage mit einer Bedienoberfläche ermöglicht, nachdem das Computerprogramm in Speichermittel der Computeranwenderstation geladen worden ist, ein Verfahren zur Anpassung der graphischen Darstellung auf der Bedienoberfläche durchzuführen.

Es ist bekannt, Daten, z.B. Prozess-, Zustands-, Steuer- und/oder Regeldaten, einer technischen Prozessanlage, z.B. einer Papiermaschine, einer Raffinerie, einer chemischen Produktionsanlage, einer Lebensmittel-Produktionsanlage, oder dergleichen, auf einer Bedienoberfläche einer Computeranwenderstation in einer graphischen Darstellung darzustellen. Dabei werden einzelne ausgewählte Daten der jeweiligen technischen Prozessanlage in einem für die jeweiligen Prozessdaten angelegten Dialogfeld, hier auch Objektfeld genannt, auf der Bedienoberfläche graphisch dargestellt.

Bekannte Prozessbedienoberflächen, sogenannte "Process faceplates", beinhalten zwar dynamische Anzeigeinhalte, beispielsweise Messwerte oder Alarme, sind aber in Bezug auf ihr Gesamterscheinungsbild statisch, d.h. für jeden Anlagenteil oder jede gewünschte Ansicht, wird ein eigenständiges Bild erstellt. Ein Wechseln zwischen Ansichten oder Anlagenteilen erfolgt dabei durch Umschalten zwischen verschiedenen Process faceplates.

Andere bekannte Bedienoberflächen bieten die Möglichkeit, in eine Prozessgrafik hinein- bzw. hinauszuzoomen. Dieses Prinzip ermöglicht es, eine Gesamtansicht der Anlage inklusive der Verknüpfungen dazwischen ebenso ansehen zu können, als auch Teilanlagen. Im Gegensatz zu der Variante mit statischen faceplates muss dabei lediglich ein einziges großes und zugleich detailliertes Process faceplate angelegt werden. Da eine hinterlegte Logik darüber entscheidet, ab welchem Vergrößerungsfaktor, auch Zoomfaktor genannt, welche Informationen angezeigt werden, ist es möglich, beliebige Teilbereichsausschnitte in nahezu beliebiger Vergrößerung anzusehen.

Ein Problem liegt in der die Anzeigeentscheidung treffenden Logik, d.h. welche Objektfelder mit welchem Informationsgehalt bei bzw. ab welchem Vergrößerungsfaktor angezeigt werden sollen. Im Stand der Technik erfolgt dies über Größenprofile, in denen verschiedene Anzeige- und Darstellungsmodalitäten hinterlegt sind, z.B. die Mindestgröße einer angezeigten Information, die Platzverfügbarkeit oder für bestimmte Objektfelder aktiv gesetzte Parameter.

In manchen Situationen ist es jedoch wichtig, gewisse Informationen in allen Ansichten zur Verfügung zu haben. Dies könnte z.B. ein bestimmter kritischer und in allen Ansichten aus Gründen der Prozesssicherheit zu überwachender Meßwert sein. Ein anderes Beispiel ist die Bedienung einer bestimmten sicherheitsrelevanten Armatur, beispielsweise eines Ventils. Eine Bedienerinteraktion über die Bedienoberfläche sollte auch hier in allen Ansichten möglich sein.

Aus der WO 2011/072731 A1 ist ein Verfahren zur Anpassung einer graphischen Darstellung auf einer Bedienoberfläche einer Computeranwenderstation zur graphischen Darstellung von Daten einer technischen Prozessanlage, welches ein Herein- und Heraus-Zoomen erlaubt.

In der DE 10 2010 036757 A1 ist eine Randleisten-Anzeige innerhalb einer Prozesssteuerungsumgebung beschrieben, die es erlaubt, Prozesssteuerungs-Systeminformationen zu organisieren und zu verwalten sowie um ausgewählte Diagnostiken und zusammenfassende Informationen oder "Schlüsselbetriebsparameter" für das Prozesssteuerungssystem anzuzeigen.

Die WO 2011/129981 A2 offenbart eine grafische Anzeige von Daten einer technischen Prozessanlage, wobei Prozessvariablen der Prozessanlage Symbolen auf der grafische Anzeige zugeordnet sind.

Die EP0509160 A1 offenbart eine Randliste, in der Anzeigen der Objekte angezeigt werden, auch wenn durch Zoomen die Objekte in der Bedienoberfläche in einen Bereich außerhalb der Bedienoberfläche verschoben werden.

Es ist daher die Aufgabe der vorliegenden Erfindung, ein einfaches Verfahren zum Hinein- oder Heraus-Zoomen in bzw. aus einer Prozessgraphik zu schaffen, das es ermöglicht, dass bestimmte Informationen auch dann noch in ausreichender Größe zur Verfügung stehen und bestimmte Bedieninteraktionen auch dann noch möglich sind, wenn der Vergrößerungsfaktor beim Zoomen ungeeignet zur Beobachtung oder zur Bedienung geworden ist.

Die Aufgabe wird gelöst durch ein Verfahren mit den Merkmalen von Anspruch 1.

Erfindungsgemäß also erfolgt mit der Auswahl eines Objektfeldes zum Zweck der Anzeige oder der Bedienerinteraktion ein Festhalten des Objektfeldes auf der Bedienoberfläche in einer für die Anzeige oder für die Bedienerinteraktion ausreichenden Größe, auch wenn durch Zoomen eine Größenänderung der graphischen Darstellung in einen für die Anzeige oder für die Bedienerinteraktion ungeeigneten Bereich erfolgt.

Das Festhalten eines Objektfeldes wird auch als Pinnen bezeichnet, ein festgehaltenes Objekt ist dann auch als Pin bezeichnet, und die Position des festgehaltenen Objektes kann auch als Pin-Position bezeichnet sein.

Das erfindungsgemäße Verfahren erlaubt es dem Bediener, einzelne Objektfelder oder Informationen einfach an einer zoombaren Bedienoberfläche festzulegen, gewissermaßen "festzupinnen", und hierdurch dafür zu sorgen, dass dieses Objektfeld bzw. eine wichtige Information auch dann noch in einer ausreichenden Größe und zuordnungsbar, also beispielsweise an der zugehörigen Graphikposition oder in direkter Nachbarschaft dazu, angezeigt wird, wenn der Vergrößerungsfaktor beim Zoomen eigentlich zu klein für dieses Objekt gewählt wird.

Der Bediener hat nun die Möglichkeit, fallbasiert zu entscheiden, einzelne Objektfelder bzw. Informationen stets angezeigt zu bekommen und die zugehörige Auswahl des entsprechenden Objektfeldes selbst vornehmen. Dies erhöht den Bedienkomfort einerseits und die Sicherheit andererseits

Gemäß einer vorteilhaften Ausführungsform der Erfindung erfolgt das Festhalten des Objektfeldes an oder nahe von dessen Objektfeldposition. Die in diesem Objektfeld enthaltene Information ist dann ihrem ursprünglichen Kontext immer noch zuordenbar.

Gemäß einer vorteilhaften Ausführungsform der Erfindung erfolgt ein Verschieben des ausgewählten Objektfeldes in eine Randleiste auf der Bedienoberfläche.

Gemäß einer vorteilhaften Ausführungsform der Erfindung erfolgt das Verschieben in die Randleiste dabei dann, wenn durch Zoomen ein Verschieben der Objektfeldposition in einen Bereich außerhalb der Bedienoberfläche erfolgt.

Es wird also in der erfindungsgemäß erweiterten Funktionalität eine Randleiste angebracht, welche festgehaltene, "festgepinnte", Objekte aufnimmt, falls der Graphikausschnitt, zu welchem sie eigentlich gehören, nicht mehr angezeigt wird, z.B. weil ein anderer Ausschnitt gewählt wurde. Sobald die Pin-Position wieder in den Anzeigebereich kommt, wechselt das Anzeigeobjekt aus der Randleiste wieder an die zugehörige Position.

In einer weiteren Ausführungsform ist es möglich, grundsätzlich alle gesetzten Pins in einer Randleiste anzuzeigen, wobei diese dann bei Zoomen weiterhin auf dem Faceplate-Ausschnitt angezeigt werden können, falls die zugehörige Pin-Position im Anzeigeausschnitt liegt.

Gemäß einer vorteilhaften Ausführungsform der Erfindung erfolgt das Festhalten des Objektfeldes an einer vorgebbaren, von der ursprünglichen Objektfeldposition abweichenden Position.

In dieser Ausführungsform des erfindungsgemäßen Verfahrens wird dem Bediener die Möglichkeit eingeräumt, Pins an beliebigen Positionen auf der Grafik zu verankern, d.h. anstatt sie dort anzuzeigen, wo sie eigentlich hingehören, eine beliebig andere Stelle zu wählen. Die Funktionalität der Sichtbarkeit in allen Ebenen ist davon nicht berührt. Ebenso kann dies mit der Randleistenfunktionalität verknüpft werden.

Gemäß einer vorteilhaften Ausführungsform der Erfindung kann dem ausgewählten Objektfeld eine vorgebbare Bedingung für dessen automatische Entfernung von der Bedienoberfläche zugeordnet werden.

In dieser Ausführungsform des erfindungsgemäßen Verfahrens können gesetzten Pins Bedingungen zu deren automatischer Entfernung angehängt werden. Diese Bedingungen können unterschiedlichster Art sein. Als Beispiele und nicht beschränkend seien genannt: a) zeitliche Bedingung, z.B. "behalte diesen Pin für die nächsten fünf Minuten" oder b) wertkausal, z.B. bis ein bestimmter Sensorwert einen bestimmten Bereich verlässt. Die gewählten Bedingungen können dabei beliebig komplex sein und kombiniert werden. Auch sind Bedingungen möglich, die auf andere Anlagenteile verweisen oder von Daten oder Zuständen in anderen Anlagenteilen abhängen.

Pins, welche keine Bedingung angeheftet bekommen oder deren Bedingung noch nicht erfüllt wurde, bleiben erhalten, bis sie manuell entfernt werden, oder bis die Bedingung doch noch erfüllt wird.

Gemäß einer vorteilhaften Ausführungsform der Erfindung ist eine Archivfunktion vorgesehen, welche die Auswahl oder das Entfernen eines Objektfeldes archivierend erfasst.

In dieser Ausführungsform des erfindungsgemäßen Verfahrens kann eine Archivfunktionalität vorgesehen werden, welche manuell oder automatisch aktiviert wird und das Setzen und das Entfernen von Pins mitschreibt.

In einer weiteren Ausführungsform kann diese Archivfunktionalität sowohl global (d.h. für alle Pins) oder für einzelne Pins gesetzt werden.

In einer weiteren Ausführungsform kann nicht nur das Setzen und Entfernen von Pins, sondern es können auch zeitliche Verläufe des gepinnten Objekts beziehungsweise der gepinnten Information archiviert werden. Man spricht hierbei auch von einem automatischen Mitloggen.

In einer weiteren Ausführungsform kann die Archivfunktionalität durch Bedingungen ausgelöst werden, welche sich z.B. auf den Systemzustand oder die Objektart beziehen. Beispielsweise könnte eine solche Bedingung lauten, dass gepinnte Feedbacksignale grundsätzlich archiviert werden.

In einer weiteren Ausführungsform kann bei Entfernen eines Objektfeldes ein Grund für die Entfernung des Objektfeldes archivierend erfasst werden.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen sowie weitere Vorteile näher erläutert und beschrieben werden.

Es zeigen
Fig. 1 schematisch eine Übersicht über den Bedienbildschirm einer Computeranwenderstation, mit einer Bedienoberfläche,
Fig. 2 schematisch eine Übersicht über den Bedienbildschirm nach Fig. 1, wobei die Größe der graphischen Darstellung durch Zoomen verringert wurde, sowie
Fig. 3 schematisch eine Übersicht über den Bedienbildschirm nach Fig. 1, wobei die Größe der graphischen Darstellung durch Zoomen vergrößert wurde.

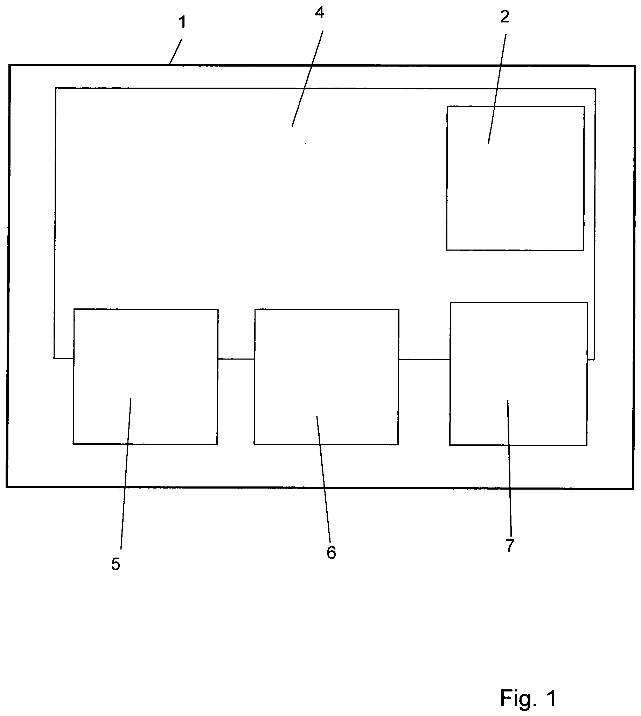

Figur 1 zeigt schematisch eine Übersicht über den Bedienbildschirm einer Computeranwenderstation zur graphischen Darstellung von Daten einer technischen Prozessanlage, mit einer Bedienoberfläche 1, auf der die graphische Darstellung verschiedener Objektfelder 2, 4, 5, 6, 7 erfolgt.

In modernen technischen Prozessanlagen gibt es zahlreiche Prozesse und Teilprozesse, die vom Bediener über Bedienbildschirme des Leitsystems gesteuert und überwacht werden müssen. Um einen Überblick über die Prozesse zu erhalten, sind die Leitsysteme so gestaltet, dass alle wichtigen Bauteile wie Motoren, Ventile, Pumpen u.s.w. dargestellt und entsprechend der Funktion mit Linien, die den Stoffflussverlauf darstellen, verbunden sind. Die aktuellen Betriebzustände werden in Form von Zahlenwerten üblicherweise in der Nähe der dargestellten Komponenten oder Bauteile einzeln visualisiert. Man kann sagen, die Bedienoberfläche, die auf dem Bedienbildschirm eines Leitsystems angezeigt wird, ist den Engineeringzeichnungen der Anlage nachempfunden. Dazu gehören Prozess- und Instrumentierungszeichungen, Rohrleitungszeichnungen und manchmal auch Zeichnungen, die die örtliche Aufteilung der Anlage widerspiegeln.

Ein Leitsystem zur Darstellung und Steuerung von technischen Prozessanlagen, beispielsweise Anlagen zur Papierherstellung, oder zur Herstellung einer Chemikalie, umfasst also mindestens einen Bedienbildschirm mit mindestens einer Bedienoberfläche zur Darstellung des Prozesses und/oder mindestens eines Teilprozesses, und/oder zur Veränderung von Prozessparametern, es umfasst weiter ein Bedienelement zur Auswahl und/oder Aktivierung und/oder Änderung von mindestens einem Prozessparameter, und es kann weiter Linien zur Kennzeichnung von Flüssen, wie beispielsweise Stoffflüssen, umfassen. Prozessparameter sind beispielsweise Stoffflüsse, Maschineneinstellungen, Ventilstellungen, Drehzahlen, Drücke oder ähnliches. Bedienelemente sind beispielsweise Mauszeiger, Texteingabefelder, angezeigte Elemente, die mit der Maus in der Größe verändert werden können, Schieberegler, oder auch andere Elemente, wie sie für Eingabefunktionen in Computerprogrammen Verwendung finden. Häufig findet man beispielsweise auch Möglichkeiten, einfach durch Mausklicks in einem ersten Schritt besondere Fenster zu öffnen, in denen dann weitere Bedienaktionen getätigt werden.

Um eine bessere Übersicht über den Prozess und/oder Teilprozess zu bekommen, und um die sich in dem Prozess, dem Teilprozess oder der Anlage insgesamt abspielenden Vorgänge oder die Flüsse, wie beispielsweise die oben erwähnten Stoffflüsse, aus technologischer und wirtschaftlicher Sicht besser beurteilen zu können, wird der Prozess und/oder Teilprozess mittels grafischer Elemente, hier auch Objektfelder genannt, auf der Bedienoberfläche 1 des Bedienbildschirms dargestellt.

In dem Beispiel der Figur 1 ist die aktuelle graphische Darstellung so gewählt, dass ein großes Objektfeld 4 und vier kleinere Objektfelder 2, 5, 6, 7 auf der Bedienoberfläche dargestellt sind.

Die Bedienoberfläche 1 bietet die Möglichkeit, in die Prozessgrafik hinein- bzw. hinauszuzoomen. Dieses Prinzip ermöglicht es, eine Gesamtansicht der Anlage inklusive der Verknüpfungen dazwischen ebenso ansehen zu können, als auch Teilanlagen.

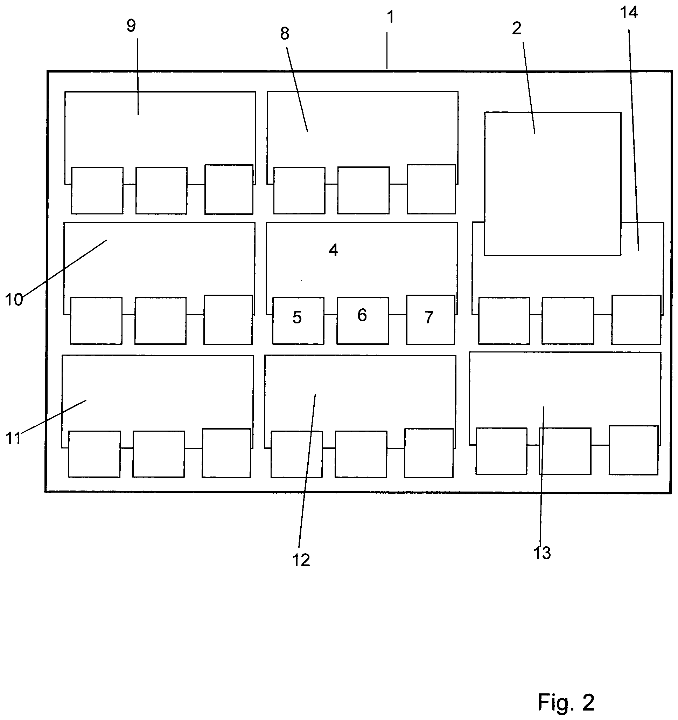

In der Figur 2 ist, ausgehend von der Darstellung in der Figur 1, aus der Prozessgraphik herausgezoomt worden. Es ist jetzt in der Figur 2 ein größerer Anlagen- bzw. Prozessteil graphisch dargestellt, es kann auch die Übersichts-Darstellung der gesamten Anlage sein.

Die Objektfelder 4, 5, 6, 7, die in der Darstellung nach Figur 1 noch relativ groß waren und daher für einen menschlichen Bediener gut zu erkennen, die darin dargestellte Daten gut lesbar und die darin enthaltenen Bedienelemente gut ansteuerbar waren, sind in der herausgezoomten Darstellung nach Figur 2 nun viel kleiner geworden. Zusätzlich sind weitere Objektfelder bzw. Objektfeld-Untereinheiten 8, 9, 10, 11, 12, 13, 14 in der graphischen Darstellung hinzugekommen.

Allerdings sind die Objektfelder nun in der herausgezoomten Darstellung so klein geworden, dass die darin dargestellten Daten nicht mehr oder nicht mehr gut lesbar und die darin enthaltenen Bedienelemente nicht mehr oder nicht mehr gut ansteuerbar sind.

Das gilt jedoch nicht für das Objektfeld 2. Dieses war nämlich in der Darstellung nach Figur 1 zuvor zum Zweck der Anzeige oder der Bedienerinteraktion von dem Bediener ausgewählt worden, beispielsweise, indem es mit der Maus markiert wurde. Es ist daraufhin auf der Bedienoberfläche 1 in seiner Größe und an seiner Objektfeldposition festgehalten, man kann auch sagen, "festgepinnt" worden, wobei die anderen Objektfelder beim Herauszoomen in ihrer Größe verkleinert wurden. Damit sind die Daten oder Bedienelemente in dem Objektfeld 2 auch nach dem Zoomen noch für den Bediener gut lesbar und gut bedienbar.

Das Objektfeld 2 hätte beim Festhalten seiner Größe auch an eine andere, von dem Bediener festlegbare Position auf der Bedienoberfläche 1 verschoben werden können.

Dem Objektfeld 2 wurde weiterhin eine vorgebbare Bedingung für dessen automatische Entfernung von der festgehaltenen Position hinzugefügt. Diese Bedingung kann beispielsweise eine bestimmte Ventilstellung sein, bei deren Erreichen kein gesonderter Überwachungsbedarf für die in dem Objektfeld 2 angezeigten Daten mehr besteht. Das Objektfeld 2 kann dann wieder auf die dem gewählten Zoomfaktor entsprechende kleinere Größe, so groß wie die anderen Objektfelder in der Darstellung nach Figur 2, "geschrumpft" werden, oder es kann ganz aus der Anzeige entfernt werden.

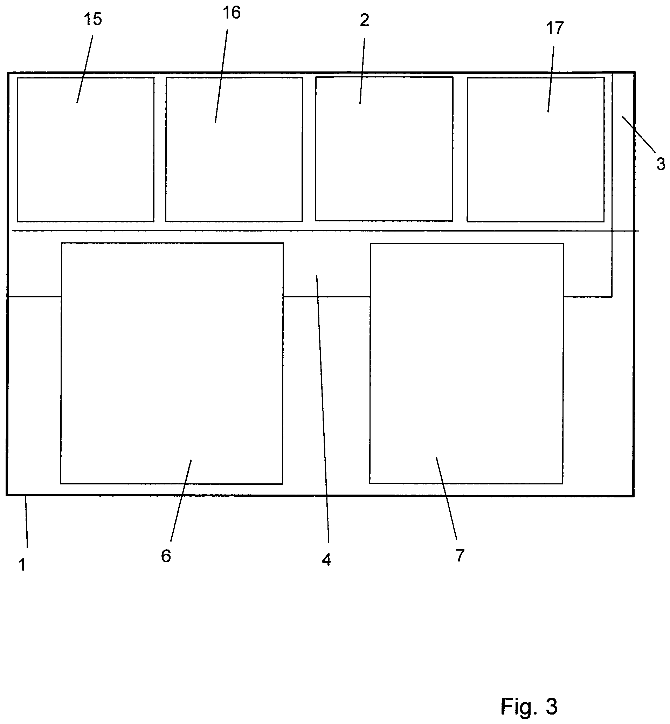

In der Figur 3 ist, ausgehend von der Darstellung in der Figur 1, in die Prozessgraphik hineingezoomt worden. Es ist jetzt in der Figur 3 ein kleinerer Anlagen- bzw. Prozessteil graphisch dargestellt. Von dem Objektfeld 4 ist nur noch ein Teil zu sehen, die Objektfelder 6 und 7 sind stark vergrößert. Somit sind in den Objektfeldern 6 und 7 mehr Details zu sehen, als vorher in der Darstellung nach Figur 1.

Bei der in der Figur 3 gewählten Darstellungsgröße wäre allerdings das Objektfeld 2 aus dem auf der Bedienoberfläche angezeigten Bereich herausgeschoben worden und damit nicht mehr in der graphischen Anzeige auf der Bedienoberfläche einsehbar.

Das Objektfeld 2 war jedoch in der Darstellung nach Figur 1 zuvor zum Zweck der Anzeige oder der Bedienerinteraktion von dem Bediener ausgewählt worden, beispielsweise, indem es mit der Maus markiert wurde. Gemäß dem erfindungsgemäßen Verfahren ist es jetzt in eine Randleiste 3 verschoben worden, die sich beim Hineinzoomen in die graphische Anzeige am oberen Rand der Bedienoberfläche 1 geöffnet hat. In dieser Randleiste 3 ist das Objektfeld 2 nun festgehalten, man kann auch sagen, "festgepinnt", in einer für die Anzeige oder für die Bedienerinteraktion ausreichenden Größe.

Das Festhalten des Objektfeldes 2 ist in der Darstellung der Figur 3 an einer von der ursprünglichen Objektposition des Objektfeldes 2 abweichenden Position auf der Bedienoberfläche erfolgt.

Wenn der Zoomfaktor bei der Darstellung nach Figur 3 wieder geändert wird, hin zu einem Faktor wie er in den Figuren 1 oder 2 zugrunde liegt, wechselt das Objektfeld 2 automatisch aus der Randleiste 3 heraus wieder an seine ursprüngliche Position, wie in der Figur 1 dargestellt. Es kann auch danach die Randleiste 3 wieder verschwinden, wenn sie leer geworden ist.

In der Randleiste 3 befinden sich noch weitere Objektfelder 15, 16, 17. Diese sind bei vorhergehenden Zoomvorgängen in der Randleiste 3 festgehalten worden und befinden sich immer noch dort, so lange, bis sie entweder durch erneutes Zoomen wieder automatisch an ihre ursprüngliche Objektposition auf der graphischen Anzeige auf der Bedienoberfläche wechseln, oder bis sie nach Eintritt ihrer "Entfernungsbedingung" automatisch entfernt wurden. Sie können auch vom Bediener zum Entfernen ausgewählt werden.

Die vorliegende Erfindung umfasst dabei auch beliebige Kombinationen bevorzugter Ausführungsformen sowie einzelner Ausgestaltungsmerkmale oder Weiterbildungen, sofern diese sich nicht gegenseitig ausschließen.

### Bezugszeichenliste

1 Bedienoberfläche
2 Objektfeld
3 Randleiste
4 Objektfeld
5 Objektfeld
6 Objektfeld
7 Objektfeld
8 Objektfeld-Untereinheit
9 Objektfeld-Untereinheit
10 Objektfeld-Untereinheit
11 Objektfeld-Untereinheit
12 Objektfeld-Untereinheit
13 Objektfeld-Untereinheit
14 Objektfeld-Untereinheit
15 Objektfeld
16 Objektfeld
17 Objektfeld

## Patentansprüche

1. Verfahren zur Anpassung einer graphischen Darstellung auf einer Bedienoberfläche (1) einer Computeranwenderstation zur graphischen Darstellung von Daten einer technischen Prozessanlage, wobei Eingabesignale auf oder an der Computeranwenderstation zu einer Größenänderung der graphischen Darstellung durch Zoomen eines vorgebbaren Anzeigebereichs auf der Bedienoberfläche (1) oder zur Auswahl eines Objektfeldes (2) der graphischen Darstellung, das sich in der graphischen Darstellung an einer zugehörigen Objektfeldposition befindet, zum Zweck der Anzeige oder der Bedienerinteraktion führen, **dadurch gekennzeichnet**
- **dass** bei Auswahl eines Objektfeldes (2) zum Zweck der Anzeige oder der Bedienerinteraktion ein Festhalten des Objektfeldes (2) auf der Bedienoberfläche (1) in einer für die Anzeige oder für die Bedienerinteraktion ausreichenden Größe erfolgt, wobei einzelne Objektfelder oder Informationen an einer zoombaren Bedienoberfläche festgelegt werden und hierdurch dieses Objektfeld oder diese Information auch dann noch in einer ausreichenden Größe und zuordnungsbar angezeigt wird, wenn der Vergrößerungsfaktor beim Zoomen zu klein für dieses Objekt gewählt wird;
- **dass** ein Verschieben des ausgewählten Objektfeldes (2) in eine Randleiste (3) auf der Bedienoberfläche (1) erfolgt, in einer für die Anzeige oder für die Bedienerinteraktion ausreichenden Größe, wenn durch Zoomen ein Verschieben der Objektfeldposition in einen Bereich außerhalb der Bedienoberfläche (1) erfolgt.

2. Verfahren nach Anspruch 1,
**dadurch gekennzeichnet,**
**dass** das Festhalten des Objektfeldes (2) an einer vorgebbaren Objektfeldposition erfolgt.

3. Verfahren nach Anspruch 2,
**dadurch gekennzeichnet,**
**dass** das Festhalten des Objektfeldes (2) an einer von der ursprünglichen Objektfeldposition abweichenden Position erfolgt.

4. Verfahren nach Anspruch 1,
**dadurch gekennzeichnet,**
**dass** dem ausgewählten Objektfeld (2) eine vorgebbare Bedingung für dessen automatische Entfernung von der Bedienoberfläche (1) zugeordnet werden kann.

5. Verfahren nach Anspruch 4,
**dadurch gekennzeichnet,**
**dass** eine Archivfunktion vorgesehen ist, welche die Auswahl oder das Entfernen eines Objektfeldes (2) archivierend erfasst.

6. Verfahren nach Anspruch 4 oder 5,
**dadurch gekennzeichnet,**
**dass** bei Entfernen eines Objektfeldes (2) ein Grund für die Entfernung des Objektfeldes archivierend erfasst wird.

7. Verfahren nach Anspruch 6,
**dadurch gekennzeichnet,**
**dass** zusätzlich zu dem Setzen und Entfernen von Objektfeldpositionen auch zeitliche Verläufe des festgehaltenen Objekts beziehungsweise der festgehaltenen Information archiviert werden.

8. Verfahren nach Anspruch 6,
**dadurch gekennzeichnet,**
**dass** die Archivfunktionalität durch Bedingungen, welche sich auf auf Systemzustand und/oder Objektart beziehen, ausgelöst wird.

9. Anordnung, umfassend mindestens eine Computeranwenderstation zur graphischen Darstellung von Daten einer technischen Prozessanlage, mit einer Bedienoberfläche (1), **dadurch gekennzeichnet, dass** die Anordnung derart eingerichtet ist, dass ein Verfahren zur Anpassung der graphischen Darstellung auf der Bedienoberfläche (1) gemäß einem der Ansprüche 1 bis 7 ausführbar ist.

10. Computerprogramm, das es einer Computeranwenderstation zur graphischen Darstellung von Daten einer technischen Prozessanlage mit einer Bedienoberfläche (1) ermöglicht, nachdem das Computerprogramm in Speichermittel der Computeranwenderstation geladen worden ist, ein Verfahren zur Anpassung der graphischen Darstellung auf der Bedienoberfläche (1) gemäß einem der Ansprüche 1 bis 7 durchzuführen.

11. Computerlesbares Speichermedium, auf dem ein Programm gespeichert ist, das es einer Computeranwenderstation zur graphischen Darstellung von Daten einer technischen Prozessanlage mit einer Bedienoberfläche (1) ermöglicht, nachdem das Computerprogramm in Speichermittel der Computeranwenderstation geladen worden ist, ein Verfahren zur Anpassung der graphischen Darstellung auf der Bedienoberfläche (1) gemäß einem der Ansprüche 1 bis 7 durchzuführen.

## Claims

1. Method for adapting a graphic representation on a user interface (1) of a computer user station for the graphic representation of data of an industrial processing plant, wherein input signals on or at the computer user station result in a size change of the graphic representation by zooming of a predefinable display region on the user interface (1) or the selection of an object field (2) of the graphic representation, which is located in the graphic representation at an associated object field position, for the purpose of display or user interaction, **characterized**
- **in that**, on selection of an object field (2) for the purpose of display or user interaction, fixing of the object field (2) on the user interface (1) in a size sufficient for the display or for the user interaction occurs, wherein individual object fields or information are fixed on a zoomable user interface and in this way this object field or this item of information is still displayed in a sufficient size and in an assignable manner even if the enlargement factor during the zooming is selected as excessively small for this object,
- **in that** a displacement of the selected object field (2) into an edge strip (3) on the user interface (1) occurs, in a size sufficient for the display or for the user interaction, if a displacement of the object field position into a region outside the user interface (1) occurs due to zooming.

2. Method according to Claim 1, **characterized in that** the fixing of the object field (2) occurs at a predefinable object field position.

3. Method according to Claim 2, **characterized in that** the fixing of the object field (2) occurs at a position which deviates from the original object field position.

4. Method according to Claim 1, **characterized in that** a predefinable condition can be assigned to the selected object field (2) for its automatic removal from the user interface (1).

5. Method according to Claim 4, **characterized in that** an archive function is provided, which detects the selection or the removal of an object field (2) in an archiving manner.

6. Method according to Claim 4 or 5, **characterized in that** a reason for the removal of the object field is detected in an archiving manner upon removal of an object field (2).

7. Method according to Claim 6, **characterized in that** in addition to the placement and removal of object field positions, time curves of the fixed object or the fixed information, respectively, are also archived.

8. Method according to Claim 6, **characterized in that** the archive functionality is triggered by conditions which relate to the system state and/or the object type.

9. Arrangement, comprising at least one computer user station for the graphic representation of data of an industrial processing plant, having a user interface (1), **characterized in that** the arrangement is configured such that a method for adapting the graphic representation on the user interface (1) according to any one of Claims 1 to 7 is executable.

10. Computer program, which allows a computer user station for the graphic representation of data of an industrial processing plant having a user interface (1), after the computer program has been loaded into storage means of the computer user station, to carry out a method for adapting the graphic representation on the user interface (1) according to any one of Claims 1 to 7.

11. Computer-readable storage medium, on which a program is stored, which allows a computer user station for the graphic representation of data of an industrial processing plant having a user interface (1), after the computer program has been loaded into storage means of the computer user station, to carry out a method for adapting the graphic representation on the user interface (1) according to any one of Claims 1 to 7.

## Revendications

1. Procédé pour l'adaptation d'une représentation graphique sur une interface utilisateur (1) d'une station utilisateur informatique pour la représentation graphique de données d'une installation de traitement technique, dans lequel des signaux d'entrée sur la station utilisateur informatique, ou au niveau de celle-ci, conduisent à une modification de taille de la représentation graphique en zoomant une zone d'affichage prédéfinissable sur l'interface utilisateur (1) ou à la sélection d'un champ d'objet (2) de la représentation graphique, lequel se trouve dans la représentation graphique à une position de champ d'objet associée, dans le but de l'affichage ou de l'interaction avec l'utilisateur,
**caractérisé en ce**
- **que**, lors de la sélection d'un champ d'objet (2) dans le but de l'affichage ou de l'interaction avec l'utilisateur, il y a un maintien du champ d'objet (2) sur l'interface utilisateur (1) à une taille suffisante pour l'affichage ou pour l'interaction avec l'utilisateur, dans lequel des champs d'objet individuels ou des informations sont déterminé(e)s au niveau d'une interface utilisateur pouvant être zoomée et ce champ d'objet ou cette information étant ainsi toujours affiché(e) à une taille suffisante et de façon associable même lorsque le facteur d'agrandissement en zoomant est sélectionné de manière à être trop petit pour cet objet ;
- **qu'**un déplacement du champ d'objet (2) sélectionné a lieu dans une lisière (3) sur l'interface utilisateur (1) à une taille suffisante pour l'affichage ou l'interaction avec l'utilisateur lorsqu'en zoomant, un déplacement de la position de champ d'objet dans une zone en-dehors de l'interface utilisateur (1) a lieu.

2. Procédé selon la revendication 1, **caractérisé en ce que** le maintien du champ d'objet (2) s'effectue au niveau d'une position de champ d'objet prédéfinissable.

3. Procédé selon la revendication 2, **caractérisé en ce que** le maintien du champ d'objet (2) s'effectue au niveau d'une position divergeant de la position de champ d'objet d'origine.

4. Procédé selon la revendication 1, **caractérisé en ce qu'**il est possible d'associer au champ d'objet (2) sélectionné une condition prédéfinissable pour l'élimination automatique de celui-ci de l'interface utilisateur (1).

5. Procédé selon la revendication 4, **caractérisé en ce qu'**une fonction d'archivage est prévue, laquelle saisit en archivant la sélection ou l'élimination d'un champ d'objet (2).

6. Procédé selon la revendication 4 ou 5, **caractérisé en ce que**, lors de l'élimination d'un champ d'objet (2), une raison pour l'élimination du champ d'objet est saisie en archivant.

7. Procédé selon la revendication 6, **caractérisé en ce qu'**en plus de la fixation et de l'élimination de positions de champs d'objet, des évolutions dans le temps de l'objet maintenu ou de l'information maintenue sont archivées.

8. Procédé selon la revendication 6, **caractérisé en ce que** la fonction d'archivage est déclenchée par des conditions, lesquelles se rapportent à l'état du système et/ou au type d'objet.

9. Dispositif comprenant au moins une station utilisateur informatique pour la représentation graphique de données d'une installation de traitement technique avec une interface utilisateur (1), **caractérisé en ce que** le dispositif est étudié de telle sorte qu'un procédé pour l'adaptation de la représentation graphique sur l'interface utilisateur (1) selon l'une des revendications 1 à 7 peut être mis en oeuvre.

10. Programme informatique, lequel permet à une station utilisateur informatique pour la représentation graphique de données d'une installation de traitement technique avec une interface utilisateur (1), une fois que le programme informatique a été chargé dans des moyens de stockage de la station utilisateur informatique, de mettre en oeuvre un procédé pour l'adaptation de la représentation graphique sur l'interface utilisateur (1) selon l'une des revendications 1 à 7.

11. Support de stockage lisible par ordinateur, sur lequel un programme est enregistré, lequel permet à une station utilisateur informatique pour la représentation graphique de données d'une installation de traitement technique avec une interface utilisateur (1), une fois que le programme informatique a été chargé dans des moyens de stockage de la station utilisateur informatique, de mettre en oeuvre un procédé pour l'adaptation de la représentation graphique sur l'interface utilisateur (1) selon l'une des revendications 1 à 7.
